## Europäisches Patentamt

## European Patent Office

## Office européen des brevets

(19)

(11) Veröffentlichungsnummer: **0 101 916**
**B1**

(12) **EUROPÄISCHE PATENTSCHRIFT**

(45) Veröffentlichungstag der Patentschrift:
**08.10.86**

(51) Int. Cl.⁴: **H 02 B 1/16**

(21) Anmeldenummer: **83107264.0**

(22) Anmeldetag: **25.07.83**

(54) **Haltevorrichtung für eine Erdungsstange.**

(30) Priorität: **26.07.82 DE 3227863**

(43) Veröffentlichungstag der Anmeldung:
**07.03.84 Patentblatt 84/10**

(45) Bekanntmachung des Hinweises auf die Patenterteilung:
**08.10.86 Patentblatt 86/41**

(84) Benannte Vertragsstaaten:
**AT BE CH DE FR GB IT LI LU NL SE**

(56) Entgegenhaltungen:
**FR - A - 2 216 700**
**US - A - 2 915 327**

(73) Patentinhaber: **ARCUS ELEKROTECHNIK Alois Schiffmann GmbH, Streitfeldstrasse 15, D-8000 München 80 (DE)**

(72) Erfinder: **Czernek, Georg, Peter Rosegger-Strasse 12, D-8905 Mering (DE)**
Erfinder: **Schneider, Walter, Karl-Witthalm-Strasse 50, D-8000 München 70 (DE)**

(74) Vertreter: **Reinländer & Bernhardt Patentanwälte, Orthstrasse 12, D-8000 München 60 (DE)**

## Beschreibung

Die Erfindung befasst sich mit einer Haltevorrichtung für eine Erdungsstange nach dem Oberbegriff des Anspruchs 1.

Bei einer solchen bekannten Haltevorrichtung ist die Hülse zweiteilig und die Teile sind mittels verschwenkbarer Laschen miteinander verbunden und stehen unter der Wirkung einer Feder, so dass sich die Hülsenteile in einer parallelogrammartigen Bewegung um die Stange schliessen können (DE-AS 25 16 086). Nachteilig bei dieser bekannten Haltevorrichtung ist, dass zum Lösen der Haltevorrichtung von der Erdungsstange ein Handhebel geschwenkt werden muss, um die Hülsenteile voneinander zu entfernen, d.h. die eine Hand der Bedienungsperson steht nicht mehr zum Halten der Erdungsstange zur Verfügung. Da andererseits Erdungsstangen sehr lang und schwer sein können, benötigt die Bedienungsperson zum Halten der Erdungsstange insbesondere in senkrechter Richtung beide Hände.

Andererseits ist es bekannt, eine Erdungsstange fest mit der an dem Erdungsfestpunkt angebrachten Hülse zu verbinden (DE-OS 31 20 821). Mit dieser bekannten Vorrichtung ist es aber nicht möglich, das obere Ende der Erdungsstange an Kontaktfestpunkte der zu erdenden Leiter anzusetzen, die unterschiedliche Abstände zu den Erdungsfestpunkten haben, wobei sich diese Abstandsunterschiede aus verschiedenen Erdungssystemen ergeben und üblicherweise bis zu 1 m betragen.

Der Erfindung liegt die Aufgabe zugrunde, eine Haltevorrichtung für eine Erdungsstange zu schaffen, die das Halten der Erdungsstange an verschiedenen Stellen in Längsrichtung relativ zu dem Erdungsfestpunkt mit absolut sicherem Stromübergang ermöglicht und ein Öffnen und Schliessen der Haltevorrichtung der Erdungsstange ohne zusätzliche Mittel erlaubt.

Gelöst wird diese Aufgabe durch die Merkmale des Anspruchs 1.

Weiterbildungen der Erfindung sind in den Unteransprüchen angegeben.

Die erfindungsgemässe Ausbildung führt dazu, dass durch Drehen der Spindel die Spreizeinrichtungen auf die Innenwände der rohrförmigen Erdungsstange drücken und sich aufgrund der Schlitzung der Erdungsstange ihr Durchmesser geringfügig vergrössert, so dass sich die Erdungsstange an die Innenwände der sie umgreifenden Hülse fest anpresst. Da sich das Spreizen nicht nur punktförmig, sondern über eine gewisse Länge der Erdungsstange auswirkt, kann die Erdungsstange innerhalb eines gewissen Längsbereichs in der Hülse festgelegt werden, so dass Abstandsunterschiede der Festpunkte überbrückt werden können. Ein grösserer zu überbrückender Längsbereich wird durch die Hintereinanderanordnung mehrerer Spreizeinrichtungen in der Erdungsstange erreicht.

Die am vorderen Ende der Spindel vorgesehene Einrichtung zum Anklemmen des vorderen Endes der Erdungsstange an dem Kontaktfestpunkt kann auch durch einen Schlitz im vorderen Teil der Erdungsstange und durch gegeneinander bewegbare Konen gebildet sein (DE-OS 31 20 821, Fig. 2), wobei diese Anklemmeinrichtung auch verwendbar ist, wenn das vordere Ende der Erdungsstange in einen seitlich geschlossenen Kontaktfestpunkt von unten senkrecht eingeschoben wird. Dabei wird mit der erfindungsgemässen Haltevorrichtung ein gleichzeitiges Arretieren der Erdungsstange an dem Erdungsfestpunkt und dem Kontaktfestpunkt durch Drehen der Spindel herbeigeführt.

Die Erfindung wird beispielhaft anhand der Zeichnung beschrieben, die zeigt in

Fig. 1 einen Längsschnitt durch die Haltevorrichtung und den vorderen Teil der Erdungsstange und

Fig. 2 einen Längsschnitt durch den vorderen Teil der Erdungsstange einer anderen Ausführungsform.

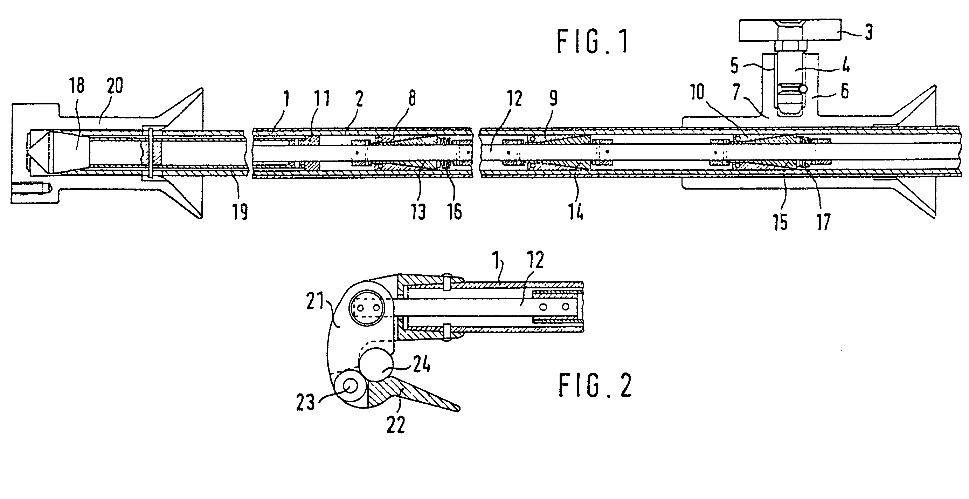

Gemäss Fig. 1 besteht die Erdungsstange aus einem metallischen Aussenrohr 1 und einem darin gelagerten Innenrohr 2. Die Erdungsstange setzt sich nach rechts in einen nicht dargestellten Teil aus Isoliermaterial fort, an dem die Bedienungsperson die Stange hält und der mit der im Inneren der Erdungsstange angeordneten Spindel 12 verbunden ist. Vom Erdungsfestpunkt 3, der beispielsweise an einem Stützer angebracht ist, geht ein Bolzen 4 ab, der in einem Sackloch 5 eines Ansatzes 6 der die Erdungsstange umgreifenden, in Umfangsrichtung ungeteilten Hülse 7 drehbar sitzt, so dass ein Verschwenken der Hülse 7 relativ zum Erdungspunkt 3 und somit ein Verschwenken der Erdungsstange aus der horizontalen Lage in die senkrechte Stellung ermöglicht wird. In dem Innenrohr 2 sind drei Klemmhülsen 8, 9 und 10 mit Innenkonen befestigt. In dem Innenrohr 2 ist in einem Innenschraubring 11 die Spindel 12 gelagert, längs der drei Ringe 13, 14 und 15 mit Aussenkonen festgelegt sind. Während der Ring 14 fest an der Spindel 12 angebracht ist, erfolgt die Festlegung der Ringe 13 und 15 auf der Spindel 12 in Längsrichtung unter Zwischenschaltung von Tellerfederpaketen 16 und 17, die eine gewisse Federung der Klemmwirkung ergeben. Der (nicht sichtbare) Längsschlitz der Erdungsstange liegt hinter der Spindel 12. In der dargestellten Lage wird die Erdungsstange mit grösster Höhe mittels der Klemmhülse 10 in der Erdungshülse 7 festgelegt. Beim Verschieben der Erdungsstange nach rechts kommen wahlweise die Klemmhülsen 8 und 9 in den Bereich der Erdungshülse 7 und die Erdungsstange kann damit an Kontaktfestpunkte in niedrigeren Höhen angesetzt werden.

Am oberen Ende ist die Erdungsstange ebenfalls geschlitzt und mit einem Konusteil 18 versehen, der mit einem Innenkonus des Aussenrohrs 1 zusammenwirkt. Beim Drehen der Spindel 12 zum Festlegen der Erdungsstange 1 in der Hülse 7 des Erdungsfestpunkts wird gleichzeitig der Konusteil 18 über eine Buchse 19 in die Erdungsstange eingezogen, wodurch auch der Durchmesser des vorderen Endes der Erdungsstange vergrössert wird und somit das vordere Ende der Erdungsstange in den Kontaktfestpunkt 20, der an dem (nicht dargestellten) zu erdenden Leiter angebracht ist, eingeklemmt wird.

Gemäss Fig. 2 ist am oberen Ende der Erdungsstange 1 eine Zweibackenklemme mit den Backen 21 und 22 vorgesehen, die um die Achse 23 zueinander schwenkbar sind. Nach Einhängen der Erdungsstange in den zu erdenden Leiter 24 wird beim Drehen der Spindel 12 die Backe 22 auf die Backe 21 zu geschwenkt, wodurch der zu erdende Leiter 24 zwischen die Backen 21 und 22 eingeklemmt wird.

### Patentansprüche

1. Haltevorrichtung für eine Erdungsstange (1, 2) mit einer Hülse (7) aus leitfähigem Material, welche einen leitfähigen Teil der rohrförmigen Erdungsstange (1, 2) umgreift, in welcher die Erdungsstange (1, 2) längsverschiebbar ist und welche an einem Erdungsfestpunkt (3) angebracht ist, wobei in der Erdungsstange (1, 2) eine Spindel (12) drehbar befestigt ist, dadurch gekennzeichnet, dass die Erdungsstange (1, 2) im Wirkungsbereich der Erdungshülse (7) über ein Stück in Längsrichtung geschlitzt ist und dass im Bereich des Schlitzes in der Erdungsstange Spreizeinrichtungen (8, 13; 9, 14; 10, 15) angebracht sind, die beim Drehen der Spindel den Durchmesser der Erdungsstange (1, 2) geringfügig vergrössern.

2. Haltevorrichtung nach Anspruch 1, dadurch gekennzeichnet, dass die Spreizeinrichtungen aus gegeneinander verschiebbaren Konen (8, 13; 9, 14; 10, 15) bestehen.

3. Haltevorrichtung nach Anspruch 2, dadurch gekennzeichnet, dass in der Erdungsstange (12) mindestens eine Klemmhülse (8, 9, 10) mit Innenkonus festgelegt ist und dass an der Spindel (12) mindestens ein Ring (13, 14, 15) mit Aussenkonus angebracht ist.

4. Haltevorrichtung nach Anspruch 3, dadurch gekennzeichnet, dass in der Erdungsstange (1, 2) hintereinander drei Klemmhülsen (8, 9, 10) festgelegt sind und dass an der Spindel (12) zwei Ringe (13, 15) unter Zwischenlage von Tellerfedern (16, 17) in Längsrichtung geringfügig verschiebbar und ein Ring (14) fest angebracht sind.

5. Haltevorrichtung nach Anspruch 3 oder 4, dadurch gekennzeichnet, dass das vordere Ende der Spindel (12) mit einer Einrichtung (18, 19) zum Anklemmen des vorderen Endes der Erdungsstange (1, 2) an einem Kontaktfestpunkt (20) des zu erdenden Leiters versehen ist.

6. Haltevorrichtung nach Anspruch 3 oder 4, dadurch gekennzeichnet, dass das vordere Ende der Spindel (12) mit einer Klemme (21, 22) zum Ansetzen an den zu erdenden Leiter (24) verbunden ist.

### Revendications

1. Dispositif formant support pour une perche de mise à la terre (1, 2) avec une douille (7) en matériau conducteur qui entoure une partie conductrice de la perche de mise à la terre (1, 2) en forme de tube, dans laquelle cette perche peut coulisser et qui est fixée à un point fixe de mise à la terre (3), une broche (12) étant montée tournante dans la perche de mise à la terre (1, 2) caractérisé en ce que la perche de mise à la terre (1, 2) est fendue sur une certaine longueur dans la direction longitudinale dans la zone d'action de la douille de mise à la terre (7) et que des dispositifs d'écartement (8, 13; 9, 14; 10, 15) sont montés dans la perche de mise à la terre (1, 2), dans la zone de la fente, et augmentent légèrement le diamètre de cette perche lorsque l'on fait tourner la broche (12).

2. Dispositif formant support pour une perche de mise à la terre selon la revendication 1, caractérisé en ce que les dispositifs d'écartement sont formés de paires de cônes déplaçables l'un par rapport à l'autre (8, 13; 9, 14; 10, 15).

3. Dispositif formant support pour une perche de mise à la terre selon la revendication 2, caractérisé en ce qu'au moins une douille de blocage (8, 9, 10) avec un cône intérieur est montée dans la perche de mise à la terre (1, 2) et qu'au moins une bague (13, 14, 15) avec un cône extérieur est montée sur la broche (12).

4. Dispositif formant support pour une perche de mise à la terre selon la revendication 3, caractérisé en ce que trois douilles de blocage (8, 9, 10) sont montées les unes derrière les autres dans la perche de mise à la terre (1, 2) et que deux bagues (13, 15) sont montées sur la broche (12) légèrement mobiles dans la direction longitudinale avec interposition de rondelles Belleville (16, 17 et qu'une bague (14) est montée fixe sur cette broche.

5. Dispositif formant support pour une perche de mise à la terre selon la revendication 3 ou 4, caractérisé en ce que l'extrémité antérieure de la broche (12) est munie d'un dispositif (18, 19) pour connecter l'extrémité antérieure de la perche de mise à la terre (1, 2) à un point fixe de contact (20) du conducteur à mettre à la terre.

6. Dispositif formant support pour une perche de mise à la terre selon la revendication 3 ou 4, caractérisé en ce que l'extrémité antérieure de la broche (12) est reliée à une pince serre-fil destinée à être accrochée au conducteur (24) à mettre à la terre.

### Claims

1. Supporting device for an earthing rod (1, 2) having a sleeve (7) of conductive material which embraces a conductive part of the pipe-shaped earthing rod (1, 2), in which the earthing rod (1, 2) is arranged slidably in the longitudinal direction ans which is mounted at an earthing fixed point (3), wherein a spindle (12) is rotatably mounted in the earthing rod (1, 2), characterized in that the earthing rod (1, 2) is slit over a part in the longitudinal direction in the effective area of the earthing sleeve (7), and that, in the area of the slit in the earthing rod, spreading means (8, 13; 9, 14; 10, 15) are fixed which slightly enlarge the diameter of the earthing rod (1, 2) at the rotation of the spindle.

2. Supporting device according to claim 1, characterized in that the spreading means consist of cones (8, 13; 9, 14; 10, 15) slidable to each other.

3. Supporting device according to claim 2, characterized in that at least one clamping sleeve (8, 9, 12) with a tapered surface on the inner side is fixed in the earthing rod (1, 2), and that at least one ring (13, 14, 15) with a tapered surface on the outer side is mounted on the spindle (12).

4. Supporting device according to claim 3, characterized in that three clamping sleeves (8, 9, 10) are fixed one after the other in the earthing rod (1, 2), and that two rings (13, 15) are arranged slightly slidably in the longitudinal direction with interposition of cup springs (16, 17) on the spindle (12), and one ring (14) is mounted fixedly.

5. Supporting device according to claim 3 or 4, characterized in that the front end of the spindle (12) is provided with a means (18, 19) for clamping the front end of the earthing rod (1, 2) to a contacting fixed point (20) of the conductor to be earthed.

6. Supporting device according to claim 3 or 4, characterized in that the front end of the spindle (12) is connected with a clamp (21, 22) for applying at the conductor (24) to be earthed.

FIG.1

18 20 1 11 2 8 12 9 10 7 3

5 4

6

19 13 16 14 15 17

5

0 101 916

1 12

21

24

23 22

FIG.2

1/1